# EUROPEAN PATENT APPLICATION

(11) **EP 4 057 181 A1**
(43) Date of publication of application: **14.09.2022**
(21) Application number: 21161348.4
(22) Date of filing: 08.03.2021
(51) Int. Cl.: G06K 9/00

(54) **IMPROVED DETECTION OF ACTION IN A VIDEO STREAM**

(71) Applicant: Robovision, 9052 Zwijnaarde (BE)
(72) Inventor: Rogiers, Alexander, 9052 Zwijnaarde (BE); Willaert, Stephane, 9052 Zwijnaarde (BE)
(74) Representative: Rogiest, Wouter

(57) **Abstract**

The present invention relates to a method for detecting a dynamic action in a video stream, comprising the steps of: obtaining a respective first and second frame of said video stream; for each frame), identifying respective semantic components by applying a semantic segmentation NN; for each frame, estimating respective semantic positions in correspondence to at least one of said identified semantic components; for each frame, determining a respective first and second static action by applying a static NN based on the respective semantic positions; detecting, based on said first and second static action, said dynamic action, by applying a dynamic NN, wherein said semantic segmentation NN is trained with labelled image data, wherein said static NN is trained with labelled semantic position data, and wherein said dynamic NN is trained with labelled dynamic action video data.

## Description

### Field of the invention

The present invention relates to detection of actions in a video stream based on deep learning.

### Background art

In automated analysis of video streams, deep learning plays an increasingly important role.

Within the field of video stream analysis, an important problem is the automated detection with respect to actions. This may relate to real-time detection and/or offline detection. In real-time settings, automated detection may replace or supplement the supervision provided by one or more human operators, which may be expensive. In offline settings, automated detection may replace or facilitate the cumbersome process of annotating video manually, which may take up a multiple of the video duration, again requiring significant budgets to carry out a task which may be repetitive.

The present invention aims at addressing the issues listed above.

### Summary of the invention

According to a first aspect, the present invention provides a method for detecting a dynamic action in a video stream, comprising the steps of:
- obtaining a respective first and second frame of said video stream;
- for each frame, identifying respective semantic components by applying a segmentation NN, preferably a semantic segmentation NN;
- for each frame, estimating respective semantic positions in correspondence to at least one of said identified semantic components;
- for each frame, determining a respective first and second static action by applying a static NN based on the respective semantic positions;
- detecting, based on said first and second static action, said dynamic action, by applying a dynamic NN,
wherein said segmentation NN, preferably said semantic segmentation NN, is trained with labelled image data, wherein said static NN is trained with labelled semantic position data, and wherein said dynamic NN is trained with labelled dynamic action video data.

A main advantage of such a method is the layered approach, moving from semantic segmentation to action detection in a video stream, with static action determination on a per-frame basis as mediator. This has the advantage of modularity, dividing a complex problem in simpler subtasks. Moreover, it enables complementary roles of the different deep learning models involved, wherein the video labeling of actions, relating to the labelled dynamic action video data, need not operate on pixel or voxel values but may operate, in preferred embodiments, directly on the level of static actions.

In embodiments, the segmentation NN is a semantic segmentation NN. In embodiments, the segmentation NN is an instance segmentation NN.

In embodiments, the dynamic action relates to an action involving a tool and an object for application of said tool, e.g., a surgical action; wherein preferably said identifying of semantic components comprises at least identifying separate semantic components for the object, e.g., tissue, and for the tool relating to said action, e.g., the surgical tool relating to said surgical action; and/or wherein preferably said estimating of semantic positions relates to estimating a pose of said tool; and/or wherein preferably said determining of respective first and second static actions relates to determining a static interaction between the semantic components; and/or wherein preferably said detecting of said dynamic action relates to detecting whether said dynamic action is ongoing or not.

Such embodiments in a surgical context provide for an elegant and scalable approach to action detection, which is not disclosed or hinted upon by any of US 10,410,542 B1, US 10,383,694 B1, and US 2019/0069957 A1. Automated detection of action may be highly desirable, as it may enable automated annotation as an alternative for annotation by hand, amounting to a time-consuming task, with annotation of one hour of video typically requiring two hours of work from one or two annotators. With manual annotation, expert knowledge is required from the annotators, further adding to the cost of manual annotation. Additionally, automated annotation may provide important corrective feedback to any surgeon, either after (in an offline setting) or during surgery (in an online setting). Furthermore, action detection may be of use for surgical trainees practicing surgical skills. For example, the detection, and optionally annotation, may be a basis for scoring of proficiency and/or accuracy of a surgical trainee while practicing a surgical task.

In embodiments, said dynamic action relates to a pose of a supervised person, e.g., a supervised person falling; wherein preferably said identifying of semantic components comprises at least identifying separate semantic components for said supervised person, a first context relating to a falling context, and a second context relating to a lying down context; and/or wherein preferably said estimating of semantic positions relates to estimating a pose of said supervised person; and/or wherein preferably said determining of respective first and second static actions relates to determining a relation between said pose and the first context and second context; and/or wherein preferably said detecting of said dynamic action relates to determining at least whether the supervised person has fallen or is lying down. Such embodiments provide for an elegant solution to the problem of fall detection, without requiring a device to be worn by the supervised person, and moreover with the potential of making the fall detection external to the environment of the supervised person, e.g., by having the video stream implemented as webcam.

In a second aspect, the invention provides a device for detecting a dynamic action in a video stream, the device comprising a processor and memory comprising instructions which, when executed by said processor, cause the device to execute a method according to the invention. In preferred embodiments, the device further comprises at least one camera configured for capturing said video stream comprising said dynamic action.

Preferred embodiments and their advantages are provided in the description and the dependent claims.

### Brief description of the drawings

The present invention will be discussed in more detail below, with reference to the attached drawings.
Fig. 1 shows an example GUI relating to the invention.
Fig. 2 shows an example annotated timeline relating to the invention.
Fig. 3 shows an example frame with detected semantic components according to the invention.
Fig. 4 shows a first flowchart regarding example embodiments relating to surgical video.
Fig. 5 shows a second flowchart regarding example embodiments relating to surgical video.
Fig. 6 shows a third flowchart regarding example embodiments relating to surgical video.
Fig. 7 shows a fourth flowchart regarding example embodiments relating to surgical video.
Fig. 8 shows an example with four camera angles for fall detection.
Fig. 9 illustrates an example flowchart for fall detection according to the invention.

### Description of embodiments

The present invention will be described with respect to particular embodiments and with reference to certain drawings but the invention is not limited thereto but only by the claims.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "video stream" may refer to a data stream comprising at least a sequence of images, preferably 2D images and/or 3D images, which are referred to as "frames". In embodiments, the video stream originates at least in part from a single camera or from a set of two or more cameras. In embodiments, the video stream is generated at least in part from a 3D virtual model. In embodiments, the video stream originates entirely from one camera or more than one camera. In embodiments, the video stream comprises both video data originating from one or more cameras and one or more additional layers. The video stream may furthermore optionally comprise any or any combination of the following: audio data, metadata such as time data and/or camera identification data and/or location data, 3D data, compression data, codec data. The video stream may be composed of any format known to the skilled person, e.g., MPEG^{®} video, full-frame video.

US 10,410,542 B1 discloses a surgical training apparatus, methods and systems which allow surgical trainees to practice surgical skills. Thereby, deep learning is mentioned as a possible technique for analysis of images. However, US 10,410,542 B1 is directed merely at segmentation of single frames, and does not allow detection of action spanning multiple frames.

US 10,383,694 B1 discloses a visual-haptic feedback system for generating a haptic feedback signal based on captured endoscopy images. US 10,383,694 B1 thereby discloses the use of deep neural network-based models such as a convolutional neural network or a recurrent neural network. In some embodiments, training the new visual-haptic model with the annotated training images involves using an imageNet-based deep learning framework. However, while US 10,383,694 B1 discloses a detection of chirurgical tools, and furthermore operates on video, it is overly complex in set-up and configuration.

US 2019/0069957 A1 discloses a system for robotic surgery includes a surgical robot with one or more arms, where at least some of the arms in the one or more arms holds a surgical instrument. The processing apparatus includes logic that when executed by the processing apparatus causes the processing apparatus to perform operations including identifying anatomical features in the video using a machine learning algorithm, and generating the annotated video. The anatomical features from the video are accentuated in the annotated video. The processing apparatus also outputs the annotated video to the display in real time. US 2019/0069957 A1 thereby discloses performing real-time video segmentation and annotation during a surgical case, while distinguishing between spatial segmentation where, for example, anatomical structures are marked and temporal segmentation where the steps of the procedures are indicated. However, US 2019/0069957 A1 discloses merely to apply deep learning to video and is silent about the implementation of such an approach.

In embodiments, at least one of said first and second frame comprises, preferably consists of pixels, preferably is a 2D image. In embodiments, each of said first and second frame comprises, preferably consists of pixels, preferably is a 2D image. In embodiments, at least one of said first and second frame comprises, preferably consists of voxels, preferably is a 3D image. In embodiments, each of said first and second frame comprises, preferably consists of voxels, preferably is a 3D image.

In embodiments, the video stream has a fixed frame rate. In embodiments, the video has a variable frame rate. In embodiments, the video stream has a frame rate of 25, 30, 50 or 60 frames per second. In preferred embodiments, the first and second frame are spaced according to a frame rate lower than 25 frames per second, e.g., 1, 2, 3, 4, 5, less than 10, 10 frames per second. This may be regardless of the frame rate with which the video is captured, i.e. the first and second frame need not be consecutive frames with respect to the video stream as captured. This may be advantageous as it may strike a balance between fast computation and low latency of action detection.

The term "action" may refer to any change taking place within the subject-matter displayed in the video stream, and relates to a portion of the screen or the entire screen. The term "action" is an umbrella term for "static action", which is defined on the level of a single frame, and "dynamic action", which is defined on the level of two or more frames. Hereby, each frame may be associated with zero actions, one action, or two or more actions. Likewise, each two or more frames may be associated with zero actions, one action, or two or more actions. Herein, said two or more frames may be consecutive frames of the same video stream but may as well be non-consecutive frames. Preferably, said two or more frames relate to different respective time instants. Preferably, said two or more frames relate to the same video stream, wherein said video stream may, e.g., originate from one or more cameras. In the context of the invention, "static action" and "single-frame action" are interchangeable. Related, in the context of the invention, "dynamic action" and "multi-frame action" are interchangeable. Accordingly, the respective terms "static" and "dynamic" do not imply any limitation with respect to the nature of the action, but merely relate to one frame, or two or more frames, being associated with said action, respectively. Furthermore, the term "dynamic action" is an umbrella term for "short-term dynamic action" and "long-term dynamic action". Herein, the terms "short-term" and "long-term" must not be construed as defining a timescale in any absolute sense. Rather, these terms are relative terms, which may be understood as follows. A "long-term dynamic action" can be inferred to occur based on a set of one or more actions, preferably two or more actions, comprising any combination of one or more static actions and/or short-term dynamic actions and/or long-term dynamic actions. However, a "short-term action" may be inferred to occur based on a set of one or more actions comprising at least one action that is not a long-term dynamic action, or, in other words, a set comprising at least one action that is either a static action or a short-term action.

In this document, the terms "tool" and "instrument" are used interchangeably.

In example embodiments, static actions include one or more objects, e.g., one or more semantic components, being visible on a given frame, wherein preferably the one or more objects belong to respective predetermined classes of objects of interest. In example embodiments, static actions include an object, e.g., a semantic component, being visible on screen and being in a pose, for instance a pose belonging to a predetermined class of poses, wherein the predetermined class of poses may for instance relate to one or more classes associated with a detected class for said object. In example embodiments, static actions include a first object and a second object, e.g., a first and second semantic component, being visible on screen and being in a static interaction, e.g., assisting, or a static non-interaction, e.g.,non-assisting, for instance a static interaction belonging to a predetermined class of static interactions, or a non-interaction belonging to a predetermined class of static non-interactions.

Examples of dynamic actions include one or more objects, e.g., two or more semantic components, being visible on the two or more frames associated with the dynamic action, wherein preferably the one or more objects belong to a respective predetermined classes of objects of interest. Examples of dynamic actions include an object, e.g., a semantic component, performing a sequence of poses, for instance a sequence of poses belonging to a predetermined class of pose sequences, e.g., movements or manipulations, wherein the predetermined class of pose sequences may for instance relate to one or more classes associated with a detected class for said object. Examples of dynamic actions include a first object and a second object, e.g., a first and second semantic component, being visible on screen and being in a dynamic interaction, e.g., incorrect bite or excessive manipulation, or a dynamic non-interaction, for instance a dynamic interaction belonging to a predetermined class of dynamic interactions, or a dynamic non-interaction belonging to a predetermined class of non-interactions.

The term "pose estimation" relates to a broad class of algorithms and techniques suitable for determining a position of an object, e.g., a segment component, relative to the camera and/or relative to other objects, e.g., other segment components.

The term "U-net" may relate to the CNN as described in, e.g., (Ronneberger, Olaf; Fischer, Philipp; Brox, Thomas (2015). "U-net: Convolutional Networks for Biomedical Image Segmentation. arXiv:1505.04597") and (Long, J.; Shelhamer, E.; Darrell, T. (2014). "Fully convolutional networks for semantic segmentation". arXiv:1411.4038) .

The terms "2D ResNet", "2D MobileNet" and "2D DenseNet" may relate to the backbone networks described in, e.g., (Donthi Reddy, Narsi Reddy & Rattani, Ajita & Derakhshani, Reza; Comparison of Deep Learning Models for Biometric-based Mobile User Authentication. Proceedings of IEEE BTAS, Los Angeles, Oct 2018. DOI:10.1109/BTAS.2018.8698586.)

Neural networks, NNs, need to be trained to learn the features that optimally represent the data. Such deep learning algorithms includes a multilayer, deep neural network that transforms input data (e.g.,images) to outputs while learning higher level features. Successful neural network models for image analysis are semantic segmentation NNs. One example is the so-called convolutional neural network (CNN). CNNs contain many layers that transform their input using kernels, also known as convolution filters, consisting of a relatively small sized matrix. Other successful neural network models for image analysis are instance segmentation NNs. As known to the skilled person, instance segmentation NNs differ from semantic segmentation NNs in terms of algorithm and output, even in cases where the input, e.g. the images, are identical or very similar.

In general, semantic segmentation may relate, without being limited thereto, to detecting, for every pixel (in 2D) or voxel (in 3D), to which class of the object the pixel belong. Instance segmentation, on the other hand, may relate, without being limited thereto, to detecting, for every pixel, a belonging instance of the object. It may detect each distinct object of interest in an image. In embodiments, 2D instance segmentation, preferably operating on 2D images, relates to Mask R-CNN, DeepMask, and/or TensorMask. In embodiments, 3D instance segmentation, preferably operating on a 3D point cloud generated from 2D images, relates to 3D-BoNet and/or ASIS.

The term neural network, NN, refers to any neural network model. The NN may comprise any or any combination of a multilayer perceptron, MLP, a convolutional neural network, CNN, and a recurrent neural network, RNN. A trained NN relates to training data associated with a neural network-based model. In this document, the terms "labelled image data", "labelled semantic position data", and "labelled dynamic action video data" all relate to training data which is labelled either entirely manually or in a semi-automated fashion.

In preferred embodiments, at least one of said semantic segmentation NN, said static NN and said dynamic NN, preferably at least said semantic segmentation NN, comprises a semantic segmentation NN being a 2D U-net. U-net is found to be particularly suitable due to increased speed and/or increased reliability, enabled by data augmentation and elastic deformation, as described in more detail in, e.g., (Ronneberger, Olaf; Fischer, Philipp; Brox, Thomas (2015). "U-net: Convolutional Networks for Biomedical Image Segmentation. arXiv:1505.04597").

In preferred embodiments, at least one of said semantic segmentation NN, said static NN and said dynamic NN, preferably at least said semantic segmentation NN, comprises a semantic segmentation NN being a 3D PointNet++. PointNet++ is an advantageous choice in that it provides both robustness and increased efficiency, which is enabled by considering neighbourhoods at multiple scales. More detail is provided, e.g., in (Charles R. Qi et al., PointNet++: Deep Hierarchical Feature Learning on Point Sets in a Metric Space, 2017, https://arxiv.org/abs/1706.02413).

In embodiments, the first frame and the second frame are the two most recent frames, e.g., from an incoming real-time video stream. In embodiments, the first and second frame are a present and future frame, e.g., from an offline pre-recorded video stream.

In embodiments, said dynamic NN is applied based on the respective estimated semantic positions and the respective determined static actions of said first and second frame, preferably without using pixel or voxel data of the first or second frame. This may have the advantage of increased modularity, which may enhance trainability and/or ease of training and/or robustness in operation and/or execution speed.

In embodiments, said static NN is applied based on the respective estimated semantic positions of said first and second frame, preferably without using pixel or voxel data of the first or second frame. This may have the advantage of increased modularity, which may enhance trainability and/or ease of training and/or robustness in operation and/or execution speed.

In embodiments, at least one of said static NN or said dynamic NN is a multilayer perceptron, and/or a non-recurrent and/or non-convolutional NN. In embodiments, each of the static NN and the dynamic NN is a multilayer perceptron. This may have the advantage of fast and simple recognition, which may preferably operate on semantic positions only and/or without involving pixels or voxels of the first or second frame. Such advantages are enabled by the layered approach.

In embodiments, said semantic segmentation NN is applied to pixel or voxel data of the respective first and second frame. This may preferably relate to the semantic segmentation NN comprising, preferably being, a CNN and/or a RNN.

In embodiments, said semantic segmentation NN comprises any or any combination of: U-net, Dynamic Graph CNN, DGCNN, PointNet++ and/or is a convolutional neural network, CNN.

In embodiments, for at least one of said first and second frame, at least two semantic components are identified, and wherein the static action determined for the concerned frame relates to the interaction between said at least two semantic components. This may relate to the elegant representation according to the invention, wherein a static action may represent an interaction between semantic components, allowing to move away from the pixel/voxel level of representation, toward a (more) semantic representation.

In embodiments, said steps are carried out for said first and second frame for obtaining said dynamic action being a first short-term action and for a third and fourth frame for obtaining said dynamic action being a second short-term action, wherein the method comprises the further step of:
- detecting, based on said first and second short-term action, a long-term action, by applying a long-term dynamic NN,
   wherein said long-term dynamic NN is trained with labelled long-term action video data. Such embodiments may be advantageous in that they further strengthen the advantages of a layered approach, with an additional layer of long-term dynamic actions on top of short-term dynamic actions. This leads to a scalable and robust approach, wherein the problem of training of the involved NNs is divided into smaller and easier sub-problems.

In embodiments, said long-term dynamic NN is applied based on the respective estimated semantic positions, the respective determined static actions of said first, second, third and fourth frame, and preferably also the respective determined first and second short-term actions, preferably without using pixel or voxel data of any of the first, second, third or fourth frame.

In embodiments, the method comprises the further step of:
- generating an indicator indicative of said detected dynamic action, preferably a visual indicator, preferably for informing a user involved in carrying out said dynamic action;
   wherein preferably said visual indicator comprises a performance indication indicative of a performance with which said action is carried out. In embodiments, this may relate to a visual message on a screen. In embodiments, this may relate to a blinking LED. In embodiments, this may relate to haptic feedback provided to the user, e.g., haptic feedback through a tool used in interaction with an object. This has the advantage of providing immediate feedback to the user in an intuitive fashion.

In embodiments, the method comprises the further step of:
- providing, on a screen, a GUI, comprising:
   ∘ said video stream; and
   ∘ an annotated timeline comprising, for said dynamic action and preferably for one or more further dynamic actions, one or more time segment indications indicative of occurrence of said dynamic action overtime; said annotated timeline comprising a progress indicator indicative of a current time position of said video stream;
- receiving, from a user of said GUI, one or more playback manipulations with respect to said video via said GUI, said one or more playback manipulations preferably comprising at least one of: a pause manipulation, a time position manipulation.

This may have the advantage of having a means to find relevant detected action in a video in a user-friendly way. By having the video stream along with an annotated timeline, a user can more quickly select relevant time segments of the video stream for watching, through an according time position manipulation. Also, the pause manipulation is facilitated. This may relate, e.g., to making a video stream ready for playback at the start of a detected action.

In embodiments involving a GUI, said annotated timeline further comprises, for said semantic components, one or more time segment indications indicative of detection of said semantic components over time. This advantageously provides the user with relevant information regarding the presence of semantic components, which may be indicative of actions to be detected, and/or may provide for more insight regarding actions detected and actions not detected.

In embodiments involving a GUI, the video stream is shown with an overlay, showing one or more of the identified semantic components by means of color and/or highlighting and/or bounding boxes.

In embodiments, said semantic segmentation NN comprises any or any combination of: 2D U-net, 3D U-net, Dynamic Graph CNN (DGCNN), PointNet++. In preferred embodiments, semantic segmentation in two dimensions is done with a convolutional neural network, CNN. In alternative embodiments, instead of a 2D CNN, also a 2D NN that is not convolutional may be considered. In preferred embodiments, segmentation in three dimensions is done with a neural network that may either be convolutional, such as a DGCNN, or non-convolutional, such as PointNet++. In embodiments, another variant of PointNet++ relating to PointNet may be considered without altering the scope of the invention. In preferred embodiments, semantic segmentation with a 2D CNN relates to U-net. In preferred embodiments, semantic segmentation with a 3D NN relates to DGCNN or PointNet++. Herein, DGCNN may relate to methods and systems described in (Yue Wang et al., Dynamic Graph CNN for Learning on Point Clouds, CoRR, 2018, http://arxiv.org/abs/1801.07829), and PointNet++ may relate to methods and systems described in (Charles R. Qi et al., PointNet++: Deep Hierarchical Feature Learning on Point Sets in a Metric Space, 2017, https://arxiv.org/abs/1706.02413).

Below, the invention is illustrated according to a plurality of example embodiments, which are not intended to limit the scope of the invention in any way.

### Example 1: example embodiments according to the invention

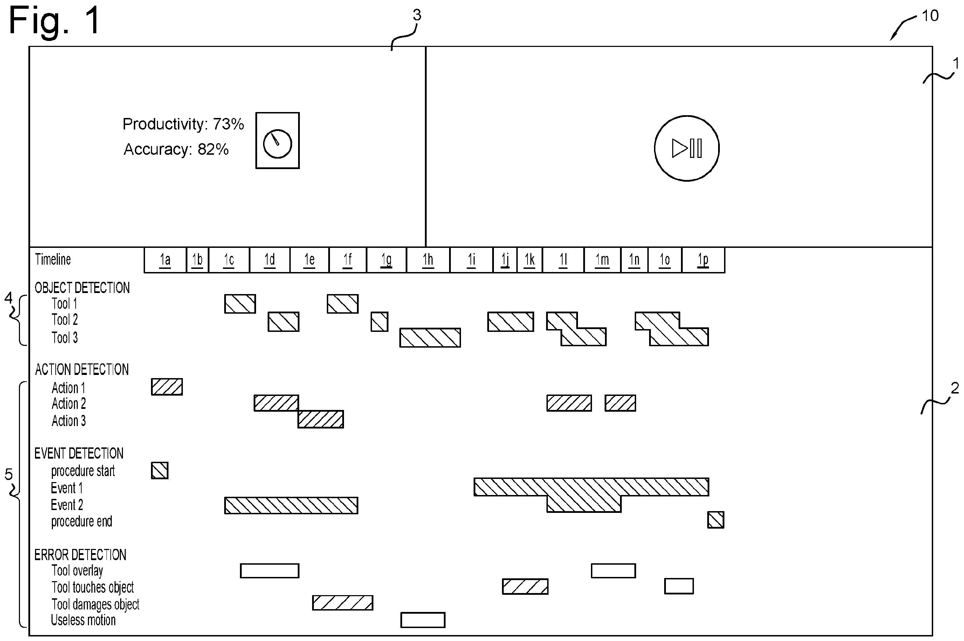

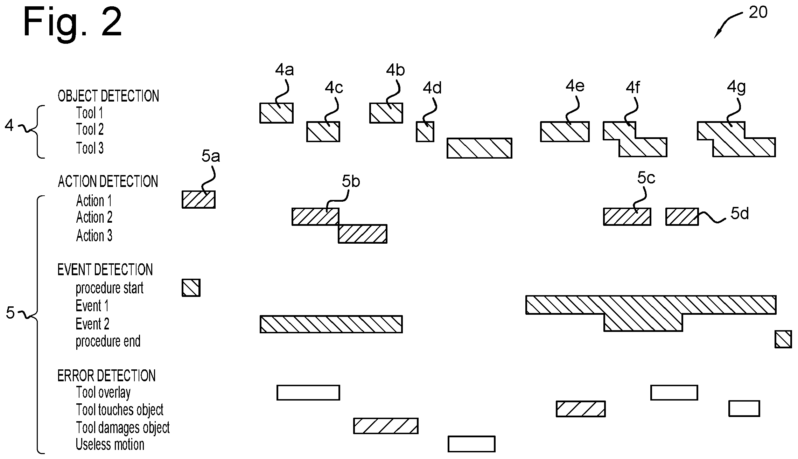

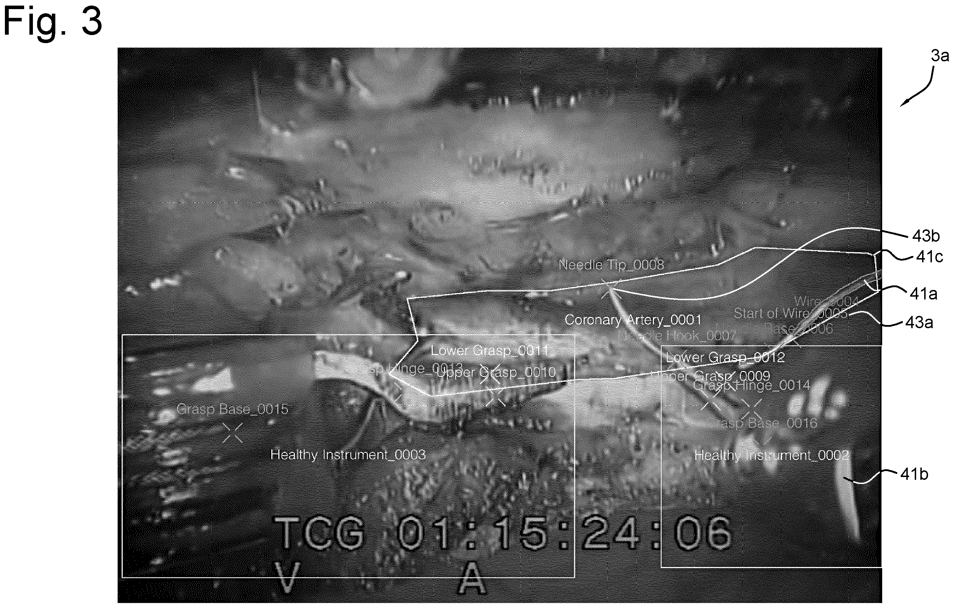

Fig. 1 shows an example GUI (10) relating to the invention. Fig. 2 shows an example annotated timeline (20) relating to the invention. Fig. 3 shows an example first frame (1a) with detected semantic components according to the invention, i.e. a semantic representation (3a) of the first frame (1a).

In this example, the GUI (10) comprises a first pane, a second pane (2) and a third pane (3). The GUI (10) provides a means for interaction of the user with the method according to the invention.

The first pane corresponds to the video stream (1), i.e. the pane comprises a video player comprising the video stream. This pane may be used for viewing the video. This may relate to playback of offline video as well as real-time display of live video. In either case, a pause manipulation is provided and may be used by the user to freeze the current frame. In either case, a time position manipulation is provided allowing the user to go back to a previous frame. In case of an offline video, also going towards future frames is enabled.

The second pane (2) comprises an annotated timeline (20). For each time position of the video stream available to date, an overview is given with respect to occurrences of semantic components (4), referred to as "objects" in this example, in particular tool 1, tool 2 and tool 3. This may be only some of the semantic components actually recognized by the method according to the invention. With reference to Fig. 2, the annotated timeline shows, for said semantic components, several time segment indications (4a-g) indicative of detection of said semantic component during a frame corresponding to the given timeline position. The corresponding frame is also shown in the second pane (2), i.e. the pane comprises graphical depictions of each of frames (1a-p). Such a depiction further facilitates the user in seeing the link between the video stream and its annotations. Additionally, the annotated timeline (20) provides an overview of several dynamic actions. Hereby, note that the legend of the annotated timeline (20) indicates some actions with the label "action", e.g., "action 1", whereas others are not indicated as such but indeed may equally relate to actions. For each dynamic action, one or more time segment indications (5a-d) indicative of occurrence of said dynamic action (5) are shown over time. In this example, each of the displayed actions is presumed to be a dynamic action, with static actions being computed but not being shown. However, in other examples falling within the scope of the invention, some actions, e.g., "tool overlay" may be considered static actions, wherein each part of the time segment indication relates to a concatenation of individual static actions, i.e. one per frame (1a-p). This provides for a mix of static actions and dynamic actions being shown on the annotated timeline. Additionally, said annotated timeline (20) comprises a progress indicator indicative of a current time position of said video stream (1). This indication may take a variety of forms. The indication may for instance comprise a vertical line (not shown in Fig. 1) being a progress bar which moves over the annotated timeline and is in sync with the progress of the video displayed in the first pane. The indication may comprise a visual highlighting (not shown in Fig. 1) of the relevant frame (1a-p) depicted in the second pane, e.g., by displaying the highlighted frame in a box and/or making the highlighted frame the only frame depicted in full color and/or full contrast and/or by diplaying the highlighted frame larger. Regardless of the appearance of the indicator, it is clear to the skilled person that any indication of relation between the time position of the video stream in the first frame and the time position on the annotated timeline may facilitate the user in their interpretation of the detected actions.

The third pane (3) displays a performance indication indicative of a performance with which a given action or set of actions is carried out. In this example, this relates at least to a proficiency and an accuracy being indicated. In embodiments, this may be combined to a blinking LED being visible to the user. In embodiments, this may relate to haptic feedback provided to the user, e.g., haptic feedback through a tool used in interaction with an object. This has the advantage of providing immediate feedback to the user in an intuitive fashion. In embodiments, the performance indication relates to feedback to a trainee with regard to their performance on a given assignment. This may relate to an advanced calculation method based on the absolute and relative timing and duration of one or more of the detected actions, or even each of the detected actions.

Both the second pane and the third pane may be said to provide an indicator indicative of detected dynamic action, which may be useful for informing a user involved in carrying out said dynamic actions, and/or for evaluating a performance of the user, e.g., a trainee being scored.

The video stream (1) on the first pane may be shown in original format but may also be shown with an overlay, showing one or more of the semantic components identified by the method by means of color and/or highlighting and/or bounding boxes. This is illustrated by Fig. 3, in this example relating to a surgical application. What is shown is an example first frame (1a) with detected semantic components according to the invention, i.e. a semantic representation (3a) of the first frame (1a). As can be seen, different semantic components and according semantic positions are highlighted. A start of a wire (43a) and a needle tip (43b) are shown as semantic positions, corresponding to identified semantic components such as wire (41a) and a (healthy) needle (41b). Also different parts of tissue are identified, such as a portion of the coronary artery (41c).

### Example 2: example embodiments relating to surgical video

Example 2 relates to surgical video. It may be seen independently from Example 1, but may also be considered in combination with Example 1.

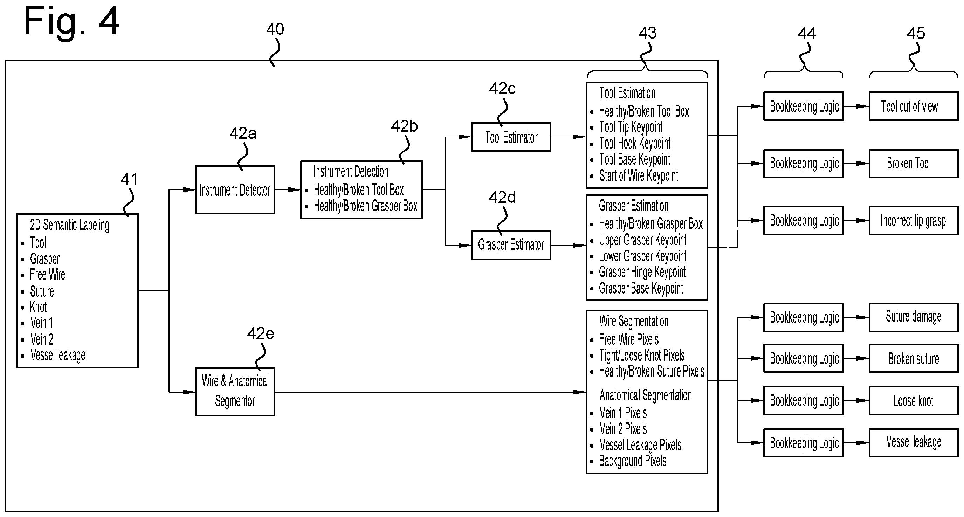

Fig. 4 shows a first flowchart regarding example embodiments relating to surgical video.

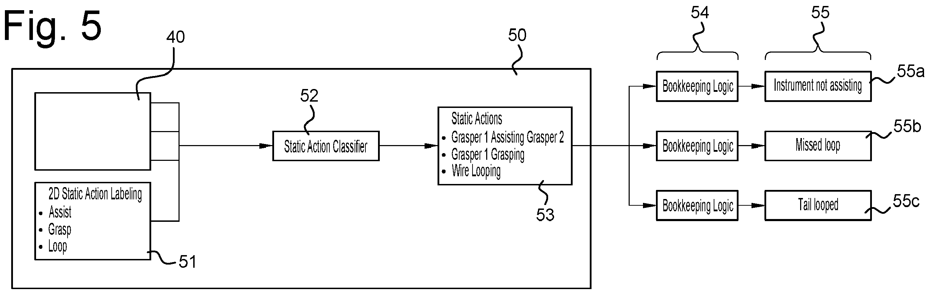

Fig. 5 shows a second flowchart regarding example embodiments relating to surgical video.

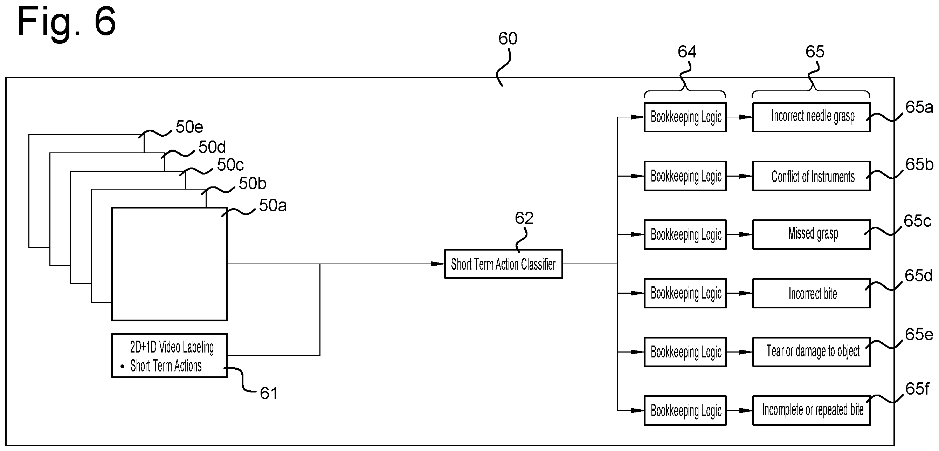

Fig. 6 shows a third flowchart regarding example embodiments relating to surgical video.

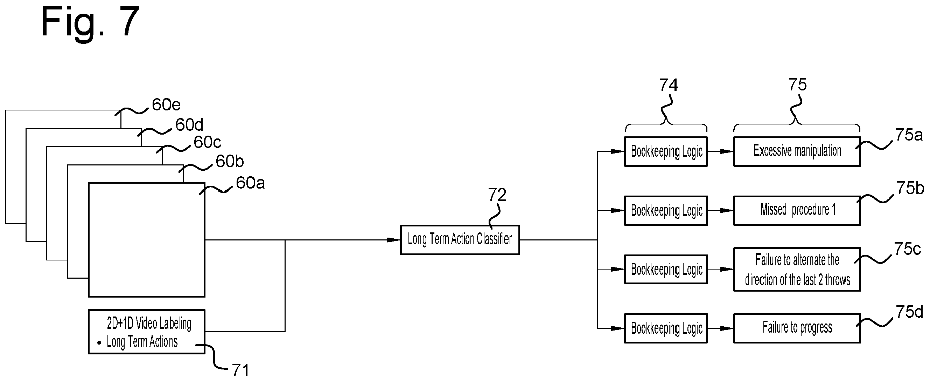

Fig. 7 shows a fourth flowchart regarding example embodiments relating to surgical video.

Particularly, Fig. 4 shows an example flowchart illustrating embodiments relating to the method steps of processing a first frame (or, equivalently, the second frame) to obtain a semantic representation of said frame. Thereby, the first frame is first semantically labelled by means of a 2D semantic labeling NN (41). This allows to identify respective semantic components, such as the ones listed in Fig. 4, of which some are illustrated further by Fig. 3 (41a, 41b). In a next step, further segmentation and/or estimation of semantic positions is performed.

With respect to semantic segmentation relating to instruments, separate semantic components are provided to distinguish between instruments, e.g., to distinguish between a needle and a grasper, as illustrated in Fig. 4. The distinguishing between instruments, e.g., the difference between needle and grasper, is hence accounted for by the 2D semantic labeling, i.e. semantic segmentation (41). In a next step, detection of instruments is performed. This comprises defining bounding boxes, applying a backbone network, and obtaining an output heat map. In another step, a detection is performed with respect to integrity of instruments (42b), with a healthy needle box or healthy grasper box, versus a broken needle box or a broken grasper box. In another step, estimation of the semantic positions of needle (42c) and of grasper (42d) is performed, preferably based on the heat map, yielding one or more estimated needle and grasper estimations (43) as listed in Fig. 4. In examples, the backbone network relates to 2D ResNet, 2D MobileNet or 2D DenseNet, which is followed by regression and classification implemented by the needle estimator and the grasper estimator. The output of the needle estimator and the grasper estimator, i.e. the estimated needle and grasper estimations (43), are then fed into bookkeeping logic (44), which is rule-based, leading to further assessments (45). This may relate, e.g., to overlap of a needle almost being covered by a grasper, leading to a "needle out of view".

With respect to semantic segmentation relating to wire and anatomy, the distinguishing between wire, anatomy, and other semantic components is accounted for by the 2D semantic labeling (41). However, a further segmenting is required to distinguish between different types of wire and different types of anatomy (tissue). This is provided for by a separate wire & anatomical segmentor (42e), yielding a segmentation with respect to different types of wire pixels and anatomic pixels (43), as illustrated in Fig. 4. This is then fed into bookkeeping logic (44), which is rule-based, leading to further assessments (45). This may relate to, e.g., counting of pixels involved in a broken suture, and, based on the number surpassing a threshold, assigning "broken suture".

Within the context of the action detection provided by the invention, the steps of Fig. 4 may be grouped according to a semantic representation grouping (40) comprising the 2D semantic labeling (41), instrument detector (42a), instrument detector (42b), needle estimator (42c) and grasper estimator (42d) and outputs (43), and wire and anatomical estimator (42e) and outputs (43). This semantic representation grouping (40) has the first frame at its input and a semantic representation of the first frame at its output. It is employed further on as module, see Fig. 5.

In preferred embodiments, the 2D semantic labeling (41) is provided so that instruments are not assigned to semantic components, but instead are ignored. In such embodiments, instruments are detected directly by the instrument detector (42a).

Fig. 5 shows an example flowchart illustrating embodiments relating to the method steps of going from the semantic representation of the first frame to static actions (55a, 55b, 55c).

The semantic representation grouping (40) provides the input, wherein 2D static action labeling (51) relating to "assist", "grasp" or "loop" is used for training a 2D deep learning model, preferably an MLP, corresponding to a static action classifier (52). The output of the static action classifier are one or more static actions (53) as illustrated by Fig. 5. The one or more static actions (53) are then fed into bookkeeping logic (54), which is rule-based, leading to further static actions (55a-c). This may relate, e.g., to wire being looped at its tail, leading to a "tail looped".

Within the context of the action detection provided by the invention, the steps of Fig. 5 may be grouped according to a static action grouping (50) comprising the semantic representation grouping (40), the 2D static action labeling (51), the static action classifier (52), and static action outputs (53). This static action grouping (50) has the semantic representation of the first frame at its input, and one or more static actions at its output. It is employed further on as module, see Fig. 6.

Fig. 6 shows an example flowchart illustrating embodiments relating to the method steps of going from per-frame static actions (55a, 55b, 55c) to short-term actions (65a-f).

Several per-frame static actions, corresponding to static action groupings (50a-e), provide the inputs, wherein 2+1D (i.e. two spatial dimensions and a temporal dimension) short-term action video labeling (61) is used for training a deep learning model, preferably an MLP, corresponding to a short term action classifier (62). The output of the short term action classifier (62) is fed into bookkeeping logic (64), which is rule-based, leading to short term actions (65a-f), as illustrated in Fig. 6. All the steps of Fig. 6 may be grouped according to a short term action grouping (60).

Fig. 7 shows an example flowchart illustrating embodiments relating to the method steps of going from short term actions (65a-f) to long-term actions (75a-d).

Several short-term actions, corresponding to static action groupings (60a-e), provide the inputs, wherein 2+1D (i.e. two spatial dimensions and a temporal dimension) long-term action video labeling (71) is used for training a deep learning model, preferably an MLP, corresponding to a long term action classifier (72). The output of the long term action classifier (72) is fed into bookkeeping logic (74), which is rule-based, leading to long term actions (75a-d), as illustrated in Fig. 7.

Each of the actions, and especially the short-term and long-term actions, as determined according to Example 2, may be provided to a user as metadata with respect to the video stream, and/or may be displayed within the annotated timeline (20) on a GUI (10) according to Example 1 and/or 2.

### Example 3: example relating to fall detection

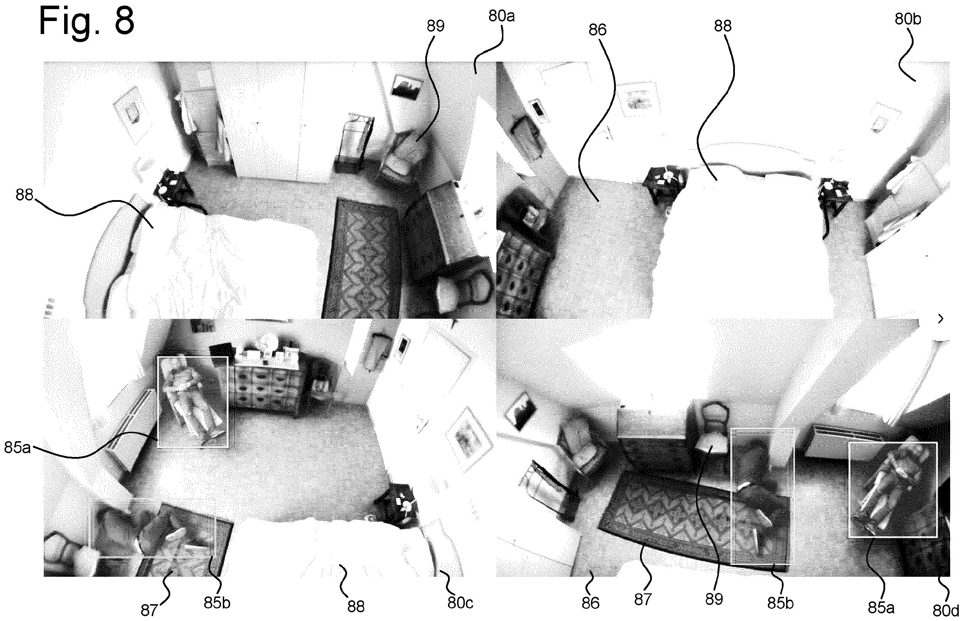

Fig. 8 shows an example with four camera angles for fall detection.

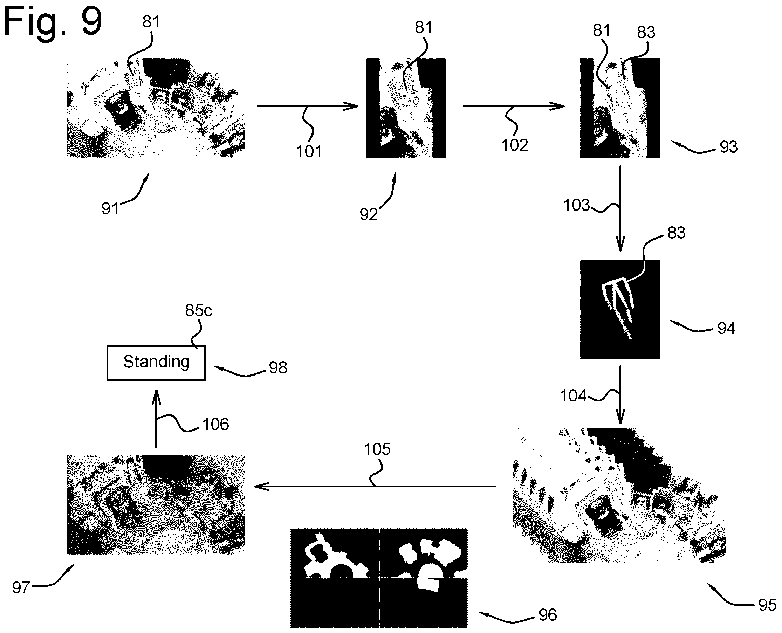

Fig. 9 illustrates an example flowchart for fall detection according to the invention.

In this example, the detection of dynamic action relates to fall detection. The four camera angles (80a-d) of Fig. 8 show four different views of the same scene, i.e. a room, wherein a supervised person is present. In this example, two persons are present. The four different views may relate to four frames, which may be captured by a single camera taking on different angles, or four different fixed-angle cameras filming concurrently. Each of the four frames may be considered as a single respective frame in a respective first, second, third and fourth video stream associated with a first, second, third and fourth camera angle. The scene comprises different objects according to a first context being a falling context, such as a floor (86) and a carpet (87). The room furthermore comprises different object according to a lying down or sitting context, such as a bed (88) and a chair/couch (89), respectively.

Fig. 8 hereby illustrated a case wherein detection of static actions (85a, 85b) is performed on the level of single frames, enabling to derive dynamic actions on a video stream level therefrom (not shown). For the example of Fig. 8, the following static actions are defined: "lying on floor" "lying on bed", "lying under covers", "lying other", "sitting on bed", "sitting" and "standing". Thereby, frames (80c) and (80d) illustrate the detection (or, likewise, the labeling) of a static action being "lying other" (85b) for a first person, and the static action "lying on floor" (85a) for another person. Thereby, in case of labeling, the labeling of data may relate to drawing bounding boxes around the supervised person, as illustrated.

The actual detection then relates to identifying, by means of a semantic segmentation neural network, separate semantic components for said supervised person (81), a first context relating to a falling context, with, e.g., the floor (86) and the carpet (87), and a second context relating to a lying down or sitting context, with, e.g. the bed (88) and the couch (89). In a next step, with reference to both Fig. 8 and 9, for each person (81), semantic positions relating to the pose (83) may be estimated, as well as the positions of the first and second context, in the form of a binary mask (96). Then, the respective first and second static actions (85a, 85b) may be detected by determining whether said pose (83), which is in both cases a "lying" pose, is in the first (86, 87) context or in the second (88, 89) context. For the first person, the semantic positions of the person overlap with semantic positions of the couch. A trained static neural network is able to determine that this relation between semantic positions of the person and the couch corresponds to the static action being "lying other". For the first person, the semantic positions of the person overlap with semantic positions of the floor and the carpet. The trained static neural network is able to determine that this relation between the semantic positions of the person and the floor and carpet corresponds to the static action being "lying on floor".

The analysis as illustrated by Fig. 8 for a single frame is repeated overtime and fed into a trained dynamic neural network (not shown). The dynamic neural network is able to distinguish between sequences of actions indicative of falling, such as multiple subsequent frames of "lying on floor", and sequences of actions indicative of lying down, such as multiple subsequent frames of "lying other". In case the dynamic action concerns the person having fallen, an alert may be generated to a third party to send assistance.

Fig. 9 illustrates an example flowchart for fall detection according to the invention. A single frame (91) comprising the supervised person (81) is obtained, and static action (85c) is detected, according to subsequent steps (101-106).

A first step (101) relates to human detection, which may be based on semantic segmentation but may also relate to other human detection algorithms, yielding a detected person (92). One such algorithm known in the art is, e.g., AlphaPose. For the detected person (92), pose estimation (102) is performed, yielding the detected person with estimated pose, i.e. comprising semantic positions (93). In a next step, pose featurization (103) is performed, yielding extracted pose features (94). In an additional, optional step, time-based stabilization (104) over some short-term frames is performed to obtain a time-stabilized pose (95). In a next step, semantic correction (105) is performed to account for the semantic positions of the first and second context, in the form of a binary mask (96). Based on this, a full static action detection input (97) is obtained, comprising the semantic positions of the first and second context and the person. Finally, a trained static neural network determines (106) the static action (98) to which the given relation between semantic positions of the person and the context corresponds. In the example of Fig. 9, the detected static action is "standing".

The static action analysis (101-106) for a single frame is repeated over time and fed into a trained dynamic neural network (not shown), similar as explained for Fig. 8, to perform dynamic action detection, distinguishing between sequences of static actions indicative of falling, and sequences of static actions indicative of lying down.

## Claims

1. Method for detecting a dynamic action (5, 65, 75) in a video stream (1), comprising the steps of:
- obtaining a respective first (1a) and second (1b) frame of said video stream (1);
- for each frame (1a, 1b), identifying respective semantic components (41a, 41b, 86-89) by applying a semantic segmentation NN (41);
- for each frame (1a, 1b), estimating respective semantic positions (43a, 43b, 83, 96) in correspondence to at least one of said identified semantic components (41a, 41b);
- for each frame (1a, 1b), determining a respective first and second static action (55a-c, 85a-c) by applying a static NN (51) based on the respective semantic positions (43a, 43b, 83, 96);
- detecting, based on said first and second static action, said dynamic action (5, 65, 75), by applying a dynamic NN (61, 71),
wherein said semantic segmentation NN is trained with labelled image data, wherein said static NN is trained with labelled semantic position data, and wherein said dynamic NN is trained with labelled dynamic action video data.

2. Method of claim 1, wherein said dynamic NN (61, 71) is applied based on the respective estimated semantic positions and the respective determined static actions of said first (1a) and second (1b) frame, preferably without using pixel or voxel data of the first or second frame.

3. Method of claims 1 or 2, wherein said static NN (51) is applied based on the respective estimated semantic positions of said first (1a) and second (1b) frame, preferably without using pixel or voxel data of the first or second frame.

4. Method of claims 2-3, wherein at least one of said static NN (51) or said dynamic NN (61, 71) is a multilayer perceptron.

5. Method of claims 1-4, wherein said semantic segmentation NN is applied to pixel or voxel data of the respective first (1a) and second (1b) frame.

6. Method of claim 5, wherein said semantic segmentation NN comprises any or any combination of: U-net, Dynamic Graph CNN, DGCNN, PointNet++ and/or is a convolutional neural network, CNN.

7. Method of claims 1-6, wherein for at least one of said first (1a) and second (1b) frame, at least two semantic components (41a, 41b) are identified, and wherein the static action determined for the concerned frame relates to the interaction between said at least two semantic components.

8. Method of claims 1-7, wherein said steps are carried out for said first and second frame for obtaining said dynamic action (5, 65) being a first short-term action (65a-f) and for a third and fourth frame for obtaining said dynamic action (5, 65) being a second short-term action (65a-f), and wherein the method comprises the further step of:
- detecting, based on said first and second short-term action, a long-term action (75a-f), by applying a long-term dynamic NN (71),
wherein said long-term dynamic NN is trained with labelled long-term action video data.

9. Method of claim 8, wherein said long-term dynamic NN (61, 71) is applied based on the respective estimated semantic positions, the respective determined static actions of said first, second, third and fourth frame, and preferably also the respective determined first and second short-term actions (65a-f), preferably without using pixel or voxel data of any of the first, second, third or fourth frame.

10. Method of claims 1-9, comprising the further step of:
- generating an indicator (2, 3) indicative of said detected dynamic action, preferably a visual indicator, preferably for informing a user involved in carrying out said dynamic action;
wherein preferably said visual indicator comprises a performance indication (3) indicative of a performance with which said action is carried out.

11. Method of claims 1-10, wherein the method comprises the further step of:
- providing, on a screen, a GUI (10), comprising:
∘ said video stream (1); and
∘ an annotated timeline (20) comprising, for said dynamic action (5, 65, 75) and preferably for one or more further dynamic actions, one or more time segment indications (5a-d) indicative of occurrence of said dynamic action (5, 65, 75) over time; said annotated timeline (20) comprising a progress indicator indicative of a current time position of said video stream (1);
- receiving, from a user of said GUI (10), one or more playback manipulations with respect to said video via said GUI (10), said one or more playback manipulations preferably comprising at least one of: a pause manipulation, a time position manipulation.

12. Method of claim 11, wherein said annotated timeline further comprises, for said semantic components (41a, 41b), one or more time segment indications (4a-g) indicative of detection of said semantic components (41a, 41b) overtime.

13. Method of claims 1-12, wherein said dynamic action (5, 65, 75) relates to a surgical action (65a-f, 75a-d); wherein said identifying of semantic components (41a, 41b) comprises at least identifying separate semantic components for tissue and for a surgical tool relating to said surgical action; wherein said estimating of semantic positions (43a, 43b) relates to estimating a pose of said surgical tool; wherein said determining of respective first and second static actions (55a, 55b, 55c) relates to determining a static interaction between the semantic components (41a, 41 b); and wherein said detecting of said dynamic action relates to detecting whether said dynamic action (5, 65, 75) is ongoing or not.

14. Method of claims 1-12, wherein said dynamic action (5) relates to a supervised person (81) falling; wherein said identifying of semantic components comprises at least identifying separate semantic components for said supervised person (81), a first context (86, 87) relating to a falling context, and a second context (88, 89) relating to a lying down or sitting context; wherein said estimating of semantic positions relates to estimating a pose (83) of said supervised person (81); wherein said determining of respective first and second static actions (85a, 85b) relates to determining a relation between said pose (83) and the first (86, 87) and second (88, 89) context; and wherein said detecting of said dynamic action relates to determining at least whether the supervised person (81) has fallen or is lying down.

15. Device for detecting a dynamic action (5, 65, 75) in a video stream (1), the device comprising a processor and memory comprising instructions which, when executed by said processor, cause the device to execute a method according to claims 1-14, wherein preferably the device further comprises at least one camera configured for capturing said video stream (1) comprising said dynamic action (5, 65, 75).
